# EUROPEAN PATENT APPLICATION

(11) **EP 4 512 594 A1**
(43) Date of publication of application: **26.02.2025**
(21) Application number: 23382865.6
(22) Date of filing: 23.08.2023
(51) Int. Cl.: B29C 41/00, B29C 41/06

(54) **POLYETHYLENE COMPOSITIONS FOR ROTOMOLDING**

(71) Applicant: Dow Global Technologies LLC, Midland, MI 48674 (US)
(72) Inventor: LIU, Xiaochun, 8051 Zürich (CH); MOLERO, Glendimar, Freeport, 77541 (US); LUGO, Elva L., Lake Jackson, 77566 (US); BITINIS, Georgia Natacha Eftalie, 43006 Tarragona (ES); EVANGELIO ARAUJO, Laura, 43006 Tarragona (ES); HILL, Martin Keith, 43006 Tarragona (ES); LLOP MERINO, Cosme, 43006 Tarragona (ES)
(74) Representative: Elzaburu S.L.P.

(57) **Abstract**

Provided herein is a rotomolding process. The rotomolding process according to embodiments disclosed herein includes a loading step, a heating step, a cooling step, and an extraction step. The rotomolding process includes use of a granular polyethylene composition containing a polyethylene polymer a polyalkylene glycol having a weight average molecular weight greater than 2000, in a concentration from 0.01 weight percent to 1 weight percent, based on the weight of the polyethylene polymer. The rotomolding process disclosed herein can result in suitable densification with reduced PIAT.

## Description

### FIELD

This application relates to the field of polyethylene compositions useful for rotational molding.

### BACKGROUND

Rotational molding or "rotomolding" is a commonly used process to make molded polymer articles such as large items like water tanks, kayaks, playground equipment. In general, the rotomolding process includes at least four steps. In a loading step, a granular polyethylene composition is loaded into a mold in the shape of the intended finished item, and the mold is closed. In a heating step, the mold is heated to molding temperature at which the granular polyethylene composition and maintained at molding temperature while being continuously rotated in two perpendicular directions, so that the polymer evenly contacts all internal surfaces of the mold. In this step, the polymer in the mold melts, fuses and adheres to the mold surface. In a cooling step, the mold is cooled to solidify the polymer. In an extraction step, the mold is opened, and the molded item is recovered.

Polyethylene polymers are a commonly used for rotomolding processes. These may include high-density polyethylene (HDPE), low-density polyethylene (LDPE) and linear low-density polyethylene (LLDPE), but today LLDPE polymers are the primary PE for use in rotomolding. The polyethylene polymers are typically ground to a powder before use, in order to speed melting and provide more uniform distribution in the mold.

Additives are frequently added to the polyethylene powder for several purposes, such as providing oxidation resistance, ultraviolet resistance, color and opacity, crack resistance and toughness. A common additive is called a "densification aid".

Densification aids enhance the ability of the polyethylene powder particles to coalesce into a consolidated mass quicker and/or at lower temperature than they would do without the densification aid. In the heating step, air between the polymer particles gets trapped in bubbles as the polymer melts and fuses. The bubbles indicate that the polymer is not fully consolidated, which generally causes the molded article to have poor physical properties, such as low impact resistance. Most of the bubbles can be released by continuing the heating step for longer times and to hotter temperatures to fully coalesce the polymer, but long heating at high temperature is inefficient and can degrade the polymer. Densification aids reduce the time and temperature needed for full consolidation, and thus improve efficiency and protect the polymer from degradation, while providing a strong molded article. Examples of common densification aids include long-chain hydrocarbon waxes.

A common measurement used to judge the heating step is peak internal air temperature (PIAT). Thermometers in the mold measure the rise and fall of the air temperature in the mold during the heating and cooling step and record to highest temperature.

It is desirable to identify densification aids for polyethylene rotomolding polymers that can achieve suitable densification with reduced PIAT.

### SUMMARY

A first aspect of the invention is a rotomolding process comprising the steps of:
a) Loading a granular polyethylene composition into a mold and closing the mold (the "loading step");
b) Heating the mold to a temperature at which the polyethylene composition melts, while rotating the mold on at least two axes to form a coating of the polyethylene composition adhered to the internal surface of the mold (the "heating step");
c) Cooling the mold to solidify the polyethylene composition adhered to the internal surface of the mold (the "cooling step"); and
d) Releasing the molded article from the mold (the "extraction step"),
characterized in that the granular polyethylene composition comprises (1) a polyethylene polymer, and (2) a polyalkylene glycol having a weight average molecular weight greater than 2000 Da, in a concentration from 0.01 weight percent to 1 weight percent, based on the weight of the polyethylene polymer.

A second aspect of the present invention is a molded article made by the process of this invention.

A third aspect of the present invention is a molded article containing a polyethylene composition that comprises (1) a polyethylene polymer, and (2) a polyalkylene glycol having a weight average molecular weight greater than 2000 Da, in a concentration from 0.01 weight percent to 1 weight percent, based on the weight of the polyethylene polymer.

The polyalkylene glycol in the polyethylene composition serves as a densification aid for the polyethylene polymer, reducing the PIAT needed in the heating step to achieve suitable consolidation of the polyethylene composition.

### BRIEF DESCRIPTION OF ILLUSTRATIONS

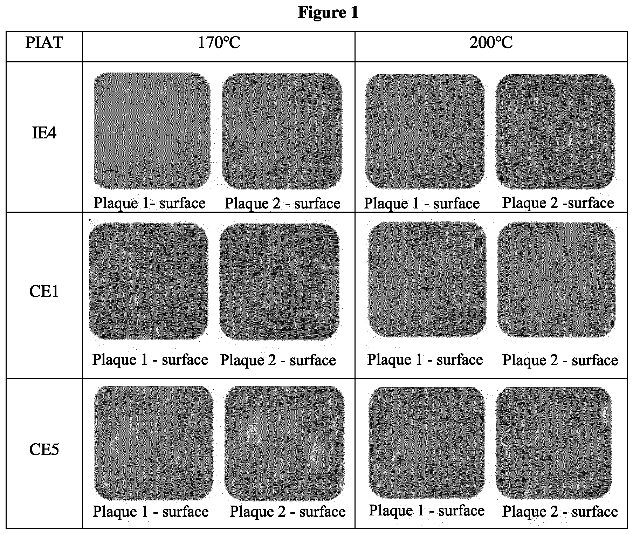

Figure 1 shows microscopic photographs of the mold-side surface of molded articles made using inventive and comparative polyethylene compositions.

### DETAILED DESCRIPTION

The rotomolding process of this invention uses a granular polyethylene composition that comprises polyethylene polymer and polyalkylene glycol.

Polyethylene polymers are widely known and commercially available. Polyethylene predominantly contains repeating units derived from ethylene, which repeating units are shown in Formula 1:

(1) -[CH₂-CH₂]-

In some embodiments, the polyethylene polymer is a homopolymer, which consists essential of repeating units derived from ethylene.

In some embodiments, the polyethylene polymer is a copolymer in which at least 70 weight percent of repeating units are derived from ethylene monomer and at least 0.5 weight percent of the repeating units are derived from one or more comonomers. Examples of suitable comonomers may include alpha-olefins. Suitable alpha-olefins may include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the alpha-olefin is selected from the group consisting of propylene, 1-butene, 1-pentene, 1-hexene, 4-methyl-1-pentene, 1-heptene, 1-octene, 1-nonene and 1-decene. In other embodiments, the alpha-olefin is selected from the group consisting of propylene, 1-butene, 1-hexene, and 1-octene. In further embodiments, the alpha-olefin is selected from the group consisting of 1-hexene and 1-octene. For example, repeating units derived from comonomers may conform to Formula 2:

(2) -[CH₂-CHR]-

wherein R is an alkyl or substituted alkyl group comprising 1 to 18 carbon atoms. In some embodiments, R comprises 1 to 8 carbon atoms or 2 to 6 carbon atoms or 3 to 6 carbon atoms.

Polyethylene polymers are commonly divided into the groups:
- high density polyethylene (HDPE), which as disclosed herein has a density from 0.93 g/cm³ to 0.98 g/cm³;
- low density polyethylene (LDPE), which as disclosed herein has a density from 0.90 g/cm³ to 0.93 g/cm³; and
- linear low density polyethylene (LLDPE), which as disclosed herein has a density from 0.90 g/cm³ to 0.94 g/cm³.

In some embodiments, the polyethylene polymer is in the polyethylene composition is an HDPE polymer. HDPE polymers generally have low levels comonomer. In some embodiments, the HDPE polymer contains at least 94 weight percent repeating units derived from ethylene monomer, or at least 96 weight percent or at least 98 weight percent or essentially 100 weight percent.

In some embodiments, the polyethylene polymer in the polyethylene composition is an LLDPE polymer. LLDPE polymers generally contain higher levels of comonomer than HDPE polymers. In some embodiments, repeating units derived from ethylene make up at least 80%, or at least 90%, or at least 92%, by weight, of the LLDPE polymer. In some embodiments, repeating units derived from ethylene make up or at most 98%, or at most 96%, or at most 94%, or at most 93%, by weight, of the LLDPE polymer. In some embodiments, repeating units derived from alpha-olefin comonomers make up at most 20% by weight, of the LLDPE polymer or at most 18%, or at most 15%, or at most 12%, or at most 10%, or at most 8%. In some embodiments, repeating units derived from alpha-olefin comonomers make up at least 2%, by weight, of the LLDPE polymer or at least 4% or at least 6% or at least 7%.

Comonomer content is sometimes expressed in terms of short chain branches per 1000 carbon atoms, wherein the short chain branches are the residue of comonomers and contain no more than 18 carbon atoms or no more than 10 carbon atoms or no more than 6 carbon atoms. In some embodiments, the LLDPE polymer has at least 2 short chain branches per 1000 carbon atoms, or at least 5 or at least 7 or at least 9. In some embodiments, the LLDPE polymer has at most 20 short chain branches per 1000 carbon atoms, or at most 18 or at most 15 or at most 13 or at most 11.

In some embodiments, the polyethylene polymer may further contain long chain branches. Long-chain branches contain at least 20 carbon atoms. LDPE polymers generally contain higher levels of long-chain branching than HDPE and LLDPE polymers. In some embodiments, the polyethylene polymer contains at least 3 long-chain branches per 1000 carbon atoms. In some embodiments, the polyethylene polymer contains no more than 3 long-chain branches per 1000 carbon atoms, or no more than 2 or no more than 1. In some embodiments, the polyethylene polymer is substantially linear, except for short-chain branches resulting from comonomers (essentially 0 long-chain branches per 1000 carbon atoms).

Polyethylene polymers are often characterized based on density and melt index. In some embodiments, the polyethylene polymer used in this invention has a density of at least 0.90 g/cm3 or at least 0.910 g/cm³ or at least 0.920 g/cm³ or at least 0.925 g/cm³ or at least 0.930 g/cm³ or at least 0.932 g/cm³ or at least 0.935 g/cm³. In some embodiments, the polyethylene polymer used in this invention has a density of at most 0.98 g/cm3 or at most 0.97 g/cm³ or at most 0.96 g/cm³ or at most 0.95 g/cm³ or at most 0.947 g/cm³;

In some embodiments, the melt index (I2) of the polyethylene polymer is at least 0.1 dg/min. or at least 0.3 dg/min. or at least 0.5 dg/min or at least 1 dg/min. or at least 2 dg/min. or at least 3 dg/min. In some embodiments, the melt index (I2) of the polyethylene polymer ranges is at most 30 dg/min, or at most 20 dg/min. or at most 15 dg/min. or at most 10 dg/min. or at most 7 dg/min. or at most 5 dg/min. In some embodiments, the melt index (I2) of the polyethylene polymer is from 1 dg/min. to 20 dg/min. or from 2 dg/min. to 10 dg/min.

In some embodiments, the polyethylene composition has a tensile stress yield (of compression molded samples) of at least 14 MPa or at least 16 MPa or at least 17 MPa or at least 18 MPa or at least 19 MPa. In some embodiments, the polyethylene composition has a tensile stress yield of no more than 30 MPa.

In some embodiments, the polyethylene composition has a tensile strain to break (of compression molded sample) of at least 300 percent or at least 400 percent or at least 500 percent or at least 550 percent. In some embodiments, the tensile strain to break is at most 1000 percent or at most 800 percent or at most 700 percent or at most 600 percent.

In some embodiments, the polyethylene composition has a flexural modulus (1% secant) of at least 500 MPa or at least 600 MPa or at least 650 MPa or at least 700 MPa or at least 720 MPa. In some embodiments, the flexural modulus (1% secant) is at most 1000 MPa or at most 900 MPa or at most 850 MPa or at most 800 MPa.

In some embodiments, the polyethylene composition has an environmental stress cracking resistance (ESCR) according to the Test Methods reach 50 percent failure (F50) in at least 50 hours or at least 55 hours or at least 60 hours or at least 65 hours or at least 70 hours.

ESCR, Flexural modulus, and tensile properties are measured in accordance with the test methods described below.

In some embodiments, the polyethylene composition contains a single polyethylene polymer. In some embodiments, the polyethylene composition contains a blend of two or more polyethylene polymers. In some embodiments, the polyethylene polymer and polyalkylene glycol are the only polymers in the polyethylene composition, and in some embodiments, the polyethylene composition contains another polymer in addition to the polyethylene polymer and polyalkylene glycol. In some embodiments, polyethylene polymer(s) make up at least 50 weight percent of the polyethylene composition (excluding pigments and fillers) or at least 70 weight percent or at least 80 weight percent or at least 90 weight percent or at least 92 weight percent or at least 94 weight percent, based on the total weight of the polyethylene composition (excluding pigments and fillers).

Suitable polyethylene polymers are commercially available from many producers, including polyethylene polymers sold by The Dow Chemical Company under the DOWLEX^{™}, AFFINITY^{™}, ELITE^{™}, ENGAGE^{™}, ATTANE^{™} and DOW^{™} HDPE trademarks.

Other polyethylene polymers can be made by known processes, such as solution, slurry and/or gas-phase polymerization of ethylene monomer and optionally comonomers in the presence of Ziegler-Natta catalysts, chromium catalysts, metallocene catalysts or other single site catalysts.

In some embodiments, the polyethylene polymer is made using a Ziegler Natta catalyst system. Exemplary Ziegler Natta catalyst systems are granular catalyst compositions that contain (1) a titanium-containing procatalyst such as titanium tetrachloride and/or titanium trichloride, and (2) an aluminum-containing cocatalyst such as triethylaluminum (TEA). In many cases, the titanium-containing procatalyst is deposited on a support such as magnesium chloride. Suitable Ziegler-Natta catalysts and processes to make and use them are described in numerous publications, such as the following patent publications: US 6,982,237 B2, US 7,507,780 B2, US 8,012,903 B2, US 8.497,330 B2, and WO2019/112929. Suitable Ziegler Natta catalyst systems are also commercially available.

In some embodiments, the polyethylene polymer is made using a chromium catalyst. Exemplary chromium catalysts contain chromium oxides supported on silica gel.

In some embodiments, the polyethylene polymer is made using a metallocene catalyst or other single-site catalyst. Metallocene catalysts contain metal atoms and ions such as titanium, zirconium or hafnium coordinated with one or more cyclopentadienyl rings, which may be substituted or part of a larger organic structure. Other single-site catalysts contain metal atoms and ions coordinated with other organic ligands, particularly polydentate ligands that contain two or more amine or hydroxyl sites available for coordination.

Granular polyethylene compositions used in the rotomolding process of this invention further contain a polyalkylene glycol having a weight average molecular weight greater than 2000 Da, which acts as a densification aid.

Polyalkylene glycols contain repeating units that meet Formula 3: 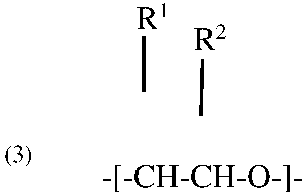 wherein each of R¹ and R² is hydrogen or an alkyl group.

In some embodiments, each of R¹ and R² independently contains no more than 6 carbon atoms or no more than 4 carbon atoms or no more than 2 carbon atoms or no more than 1 carbon atom. In some embodiments, R¹ and R² together contain on average no more than 8 carbon atoms or no more than 6 carbon atoms or no more than 4 carbon atoms or no more than 2 carbon atoms or no more than 1 carbon atom or no more than 0.5 carbon atoms or no more than 0.25 carbon atoms. In some embodiments, R¹ and R² are both hydrogen in at least 80 percent of repeating units, or at least 90 percent or essentially 100 percent. In some embodiments, the polyalkylene glycol contains, or consists essentially of, ethylene oxide [-CH₂-CH₂-O-] units, propylene oxide [-CH₂(CH₃)-CH₂-O-] units or both types of units.

In some embodiments, the polyalkylene glycol is polyethylene glycol. In some embodiments, the polyalkylene glycol is a polyethylene glycol/polypropylene glycol copolymer.

In some embodiments, the polyalkylene glycol has a weight average molecular weight of at least 2100 Da or at least 2200 Da or at least 2400 Da or at least 2600 Da or at least 2800 Da or at least 3000 Da or at least 3200 Da or at least 3350 Da or at least 3500 Da or at least 4000 Da or at least 4500 Da or at least 5000 Da. In some embodiments, the polyalkylene glycol has a weight average molecular weight of at most 30,000 Da or at most 20,000 Da or at most 15,000 Da or at most 12,000 Da or at most 10,000 Da.

In some embodiments, the polyalkylene glycol contains on average at least 48 repeating oxyalkylene units or at least 50 or at least 60 or at least 65 or at least 70. In some embodiments, the polyalkylene glycol contains on average at most 500 repeating oxyalkylene units or at most 400 or at most 300 or at most 250 or at most 220 or at most 200.

In some embodiments, the polyalkylene glycol has a melting temperature of at least 30°C or at least 35°C or at least 40°C or at least 45°C or at least 48°C or at least 50°C. In some embodiments, the polyalkylene glycol has a melting temperature of at most 100°C or at most 90°C or at most 80°C or at most 70°C.

In some embodiments, the polyalkylene glycol has a hydroxyl number of less than 70 mg KOH/gm or no more than 50 or no more than 40. In some embodiments, the polyalkylene glycol has a hydroxyl number of at least 5 mg KOH/gm or at least 8 or at least 10 or at least 12.

In some embodiments, the polyalkylene glycol has a viscosity at 100°C of at least 20 cSt or at least 40 cSt or at least 60 cSt or at least 80 cSt. In some embodiments, the polyalkylene glycol has a viscosity at 100°C of at most 2000 cSt or at most 1200 cSt or at most 1000 cSt or at most 900 cSt.

Suitable polyalkylene glycols are commercially available under the CARBOWAX^{™} trademark. Others can be made by known processes, such as polymerization of corresponding alkylene oxide monomers in the presence of an acid or base initiator. See for example, US Patent Publication US 2007/0179199 A1 and "Introduction of Polyethylene Glycol (PEG)", made available by BOC Sciences at https://peg.bocsci.com/resources/technical-information/introduction-of-polyethylene-glycol-peg.

The concentration of polyalkylene glycol in the granular polyethylene composition is suitable to function as a densification aid for the polyethylene polymer. In some embodiments, the granular polyethylene composition contains is at least 0.01 weight percent of polyalkylene glycol, based on the weight of the polyethylene polymer, or at least 0.2 weight percent or at least 0.3 weight percent or at least 0.4 weight percent or at least 0.5 weight percent or at least 0.6 weight percent or at least 0.7 weight percent or at least 0.75 weight percent. In some embodiments, the granular polyethylene composition contains at most 1 weight percent of polyalkylene glycol, based on the weight of the polyethylene polymer, or at most 0.8 weight percent or at most 0.6 weight percent or at most 0.4 weight percent or at most 0.3 weight percent or at most 0.2 weight percent or at most 0.1 weight percent. Exemplary concentrations of polyalkylene glycol include from 0.01 to 1 weight percent of the polyethylene polymer or 0.02 to 0.8 weight percent of the polyethylene polymer or 0.04 to 0.6 weight percent of the polyethylene polymer or 0.06 to 0.3 weight percent of the polyethylene polymer or 0.07 to 0.2 weight percent of the polyethylene polymer or 0.75 to 0.1 weight percent of the polyethylene polymer.

The compositions of this invention may optionally further comprise additives useful for molded polyethylenes. Additives for polyethylene polymers are well known and commercially-available. They are described in numerous publications, such as the pamphlet: Tolinski, "Additives for Polyolefins. Getting the Most out of Polypropylene, Polyethylene and TPO (Second Edition)" published by the Plastics Design Library in 2015. Examples of common additives include antioxidants, light stabilizers, acid scavengers, processes aids (such as lubricants, rheology control agents, mold release agents, antiblock additives and slip agents), antistatic additives, flame retardants, pigments and fillers. The preferred selection of additives will depend on the polyethylene polymer and on the intended use of the final product.

Antioxidants are commonly divided into primary antioxidants (radical scavengers) and secondary antioxidants (hydroperoxide scavengers).

Examples of common primary antioxidants include: Hindered phenols, such as pentaerythrityl tetrakis(3-(3,5-di-tert-butyl-4-hydroxyphenol)propionate), which is commercially available under the name of Irganox 1010, or octadecyl 3-(3,5-di-tert-butyl-4-hydroxyphenyl)propionate, which is commercially available under the name Irganox 1076; Hindered amines, such as the polyamines that are commercially available under the name Chimassorb 944 or Chimassorb 2020; Vitamin E, either natural or artificial; Lactones.

Examples of common secondary antioxidants include: Phosphites such as tris(2,4-di-tert-butylphenyl) phosphite, which is commercially available under the name IRGAFOS^{™} 168, or tris(nonylphenyl) phosphite; and Thioesters such as distearyl thio dipropionate.

Light stabilizers commonly work by blocking light (especially ultraviolet light) or absorbing damaging light and emitting the energy in a less-damaging form. Examples of common light stabilizers include: Carbon black; Pigments such as titanium dioxide; Benzophenones such as 2-hydroxy-4-n-octoxybenzophenone, which is commercially available as Chimassorb 81 and Cyasorb UV-531; Benzotriazoles such as 2-(5-chloro-2H-benzotriazol-2-yl)-6-(1,1-dimethylethyl)-4-methyl phenol, which is commercially available as Tinuvin 326; Cyanoacrylates such as 1, 3-bis-((2'-cyano-3', 3'-diphenylacryloyl) oxy)-2, 2-bis-(((2'-cyano-3', 3'-diphenylacryloyl) oxy) methyl)-propane, which is commercially available as Uvinul 3030; and Phenyl- or aryl esters, such as benzoic acid, 3, 5-(1, 1-dimethylethyl)-, 2,4-bis (1, 1-dimethyethyl) phenyl ester, which is commercially available as Tinuvin 120.

Some primary antioxidants described above may be used in connection with the light stabilizer, to clean up free radicals that may be created when the light stabilizer absorbs light. The hindered amine stabilizers can be used for this purpose.

Examples of acid scavengers include hydrotalcites (such as those commercially available under the name DHT-4A), metal stearates (such calcium stearate and zinc stearate), and zinc oxide.

Examples of processing aids include: Lubricant -- some lubricants are metal salts of fatty acids, such as metal stearates like calcium stearate and zinc stearate - some lubricants are fatty amides, esters, acids or alcohols, such as glycerol monostearate, erucamide, oleamide, and ethylene bis(stearamide) and some lubricants are polymers such as silicones, fluoropolymers and polyolefin plastomers or oligomers; rheology control agents, such as 3M Dynamar^{™} products; mold release agents - mold release agents reduce adhesion of a polyolefin polymer to a mold and examples of mold release agents include fatty acids or esters like glycerol monostearate; amides like erucamide and oleamide; hydrocarbon microcrystalline waxes; and partially oxidized polyethylene; slip agents - slip agents lower friction between a polyolefin polymer and processing equipment and examples of slip agents include fatty acid amides like erucamide, oleamide, stearamide, ethylene bis-stearamide and stearyl stearamide; antiblock agents - antiblock agents prevent layers of polyolefin polymer from sticking to each other and examples of antiblock agents include inorganic materials that roughen the surface of a film, like diatomaceous earth, silica or talc, and fatty acid amides like behanamide, erucamide or stearamide.

Examples of antistatic additives include: non-ionic compounds such a glycerol esters like glycerol monostearate, lauric diethanolamide (commercially available as Chemstat LD-100) and ethoxylated amines (commercially available as Chemstat 122); dissipative polymers such as polyether block amides and ethylene ionomers; conductive fillers such as carbon black, graphene, graphite, metal particles and coated inorganic particles; and conductive fibers such as metal fibers or carbon fibers.

Examples of flame retardants include: brominated or chlorinated compounds such as Decabromodiphenyl ether (commercially available as FR1210), Tetrabromobisphenol A bis(2,3-dibromopropyl) ether (commercially available as FR-720) and chlorinated paraffin (commercially available as Chlororez 700) and phosphate flame retardants, which typically contain an acid source such as ammonium polyphosphate (commercially available as Exolit AP-570), a cross-linker such as pentaerythritol and a foaming agent such as melamine.

Examples of pigments include: white colorants such as titanium dioxide, zinc sulfide and barium sulfate; black colorants such as carbon black, copper chromate and brown hematite; colored pigments such as azo dyes for a wide range of colors, iron oxide or quinacridone for red, cadmium sulfide for yellow, chromium (III) oxide for green or cobalt aluminate for blue; metal flakes to give a metallic appearance; mica flakes to add a pearlescent or speckled appearance.

Examples of common fillers include calcium carbonate, talc, mica, wollastonite, silica and glass spheres. Many common fillers have average particle sizes of 1-100 microns or 2-50 microns.

Many potential additives can serve more than one purpose. For example, calcium stearate can serve as both a lubricant and an acid scavenger in polyolefin, and hindered amine antioxidants are also frequently used in light stabilizer packages. Fatty amides may be useful as lubricants, slip agents, and antiblock additives.

In some embodiments, the concentration of additives (excluding pigments and fillers) is at most 5 weight percent of the polyethylene polymer or at most 4 weight percent or at most 3 weight percent or at most 2 weight percent or at most 1 weight percent or at most 0.5 weight percent. In some embodiments, the concentration of additives (excluding pigments and fillers) is essentially 0 weight percent of the polyethylene polymer or at least 0.01 weight percent or at least 0.2 weight percent or at least 0.3 weight percent or at least 0.4 weight percent or at least 0.5 weight percent.

Pigments and fillers may be used in higher concentrations. In some embodiments, the concentration of pigments and fillers is at most 70 weight percent of the polyethylene polymer or at most 60 weight percent or at most 50 weight percent or at most 40 weight percent or at most 30 weight percent or at most 20 weight percent. In some embodiments, the concentration of pigments and fillers is essentially 0 weight percent of the polyethylene polymer or at least 0.5 weight percent or at least 1 weight percent or at least 3 weight percent or at least 5 weight percent or at least 1 weight percent.

Polyethylene compositions used in rotomolding are typically in the form of powders. It is known to grind or pulverize pellets of polyethylene polymer to make powders of desired size, and equipment for this purpose is commercially available with instructions. See, for example, McDaid, "The Grinding of Polyethylene Powders for Use in Rotational Molding (Thesis)" published by Queen's University Belfast (1998) and available at https://pure.qub.ac.ult/en/studentTheses/the-grinding-of-polyethylene-powders-for-use-in-rotational-mouldi. Optimal powder sizes may vary depending on the equipment and processes used for grinding and rotomolding. In some cases, median particle sizes are no more than 28 mesh (600 micron) or 35 mesh (500 micron) or 45 mesh (350 micron). In some cases, median particle sizes are at least 140 mesh (100 micron) or at least 100 mesh (150 micron) or at least 60 mesh (250 micron) or at least 50 mesh (300 micron).

In some embodiments, the components of the granular polyethylene composition may be ground separately and physically blended to make the composition used in this invention.

In some embodiments, the components of the polyethylene composition may be melt blended and coextruded to form pellets, strands or other shaped articles for storage and transportation. The pellets or other shaped articles can be ground to form powders when powders are needed. Equipment for melt blending and coextrusion is commercially available, and processes for melt blending and coextrusion are well-known. In summary, the components of the polyethylene composition are subjected to heat and shear in an extruder, blender or kneader or similar equipment until they melt and become homogeneously blended together. Extruders are commonly used blending equipment, and extrusion is a commonly used blending technology. In some embodiments, the melt temperature during blending is at least 180°C or at least 185°C or at least 190°C. In some embodiment, the melt temperature during blending is at most 210°C or at most 205°C or at most 200°C. Pellets can be made by extruding, cooling and chopping the melt blended polyethylene composition. Suitable pelleting equipment is commercially available, with instructions for its use. In some embodiments, the resulting pellets may have a diameter between 1 mm and 5 mm and may have a length between 1 mm and 10 mm.

In some embodiments, a masterbatch may be formed by melt-blending the polyalkylene glycol and optionally other additives in a high concentration with a polyethylene polymer. The process for melt-blending and extruding a masterbatch is similar to the process for melt-blending and extruding pellets as described above, except the concentration of polyalkylene glycol and/or other additives in the masterbatch is higher. In some embodiments, the concentration of polyalkylene glycol in a masterbatch is at least 1 weight percent, based on the weight of polyethylene, or at least 3 weight percent or at least 5 weight percent. In some embodiments, the concentration of polyalkylene glycol in a masterbatch is at most 20 weight percent, based on the weight of polyethylene, or at most 15 weight percent or at most 10 weight percent. The masterbatch can be conveniently melt-blended with more polyethylene polymer to form other embodiments of the compositions that are suitable for use in rotomolding.

The granular polyethylene compositions containing polyalkylene glycol polymer are used in a rotational molding process, which comprises the steps of:
a) Loading the granular polyethylene composition into a mold and closing the mold (the "loading step");
b) Heating the mold to a temperature at which the polymer melts while rotating the mold on at least two axes to form a coating of the polyethylene composition adhered to the internal surface of the mold (the "heating step");
c) Cooling the mold to solidify the polyethylene composition adhered to the internal surface of the mold (the "cooling step"); and
d) Releasing the molded article from the mold (the "extraction step").
Suitable rotational molding equipment and operating instructions to use it are known and commercially available.

Rotational molding produces hollow articles. Therefore, the amount of polyethylene composition loaded into the mold in the loading step may be less than is needed to entirely fill the mold. In some embodiments, the amount of polyethylene composition loaded into the mold is sufficient to produce molded articles having an average wall thickness of at least 1.0 mm or at least 1.5 mm or at least 2.0 mm or at least 3.0 mm. In some embodiments, the amount of polyethylene composition loaded into the mold is sufficient to produce molded articles having an average wall thickness of at most 50 mm or at least most 40 mm or at most 30 mm or at most 25 mm.

The closed mold typically contains a vent to allow air to escape during the heating step. The vent usually protrudes into the center of the mold, so that molten and powdered polyethylene composition does not come out of the vent as the mold rotates.

In some embodiments, the peak internal air temperature (PIAT) achieved in the heating and cooling step is at least 160°C or at least 165°C or at least 170°C or at least 180°C. In some embodiments, the peak internal air temperature (PIAT) achieved in the heating and cooling step is at most 220°C or at most 210°C or at most 200°C or at most 190°C.

The heated mold is rotated on at least two axes, so that the polyethylene composition can contact all internal surfaces of the mold. In some embodiments, the axes of rotation are substantially perpendicular to each other. In some embodiments the rotation speed is at least at least 1 rpm or at least 3 rpm or at least 5 rpm. In some embodiments, the rotation speed is at most 40 rpm or at most 30 rpm or at most 20 rpm. Rotation in both axes is not necessarily the same speed. Depending on the shape of the mold, it may be desirable to rotate the longer axis at a speed faster or slower than the shorter axis.

The time of the heating step varies depending on the equipment and the item being made. In most embodiments, it is desirable to maintain the heating step until the polyethylene composition coalesces to form a molded article. In some embodiments, times of 5 to 40 minutes are used.

After the heating step, the mold is cooled in the cooling step. Cooling may be speeded by blowing cool air on the mold or spraying cooling water on the mold or both. In most embodiments, the cooling step is maintained until the molded article solidifies enough to maintain its shape outside the mold. In some embodiments, the mold is cooled to a temperature below the Vicat softening temperature of the polyethylene composition. In some embodiments, the mold is cooled to a temperature of at most 110°C or at most 100°C or at most 90°C or at most 80°C.

When the mold reaches the desired temperature, the mold is opened, and the molded article is recovered in the extraction step.

The resulting molded article contains a polymer composition of this invention.

Densification of the molded article can be directly observed by looking at the mold-side of the article under a microscope and observing the number and size of bubbles visible at the surface. Fewer and smaller bubbles indicate that the molded article is more densified.

Alternatively, densification can be indirectly judged by the physical properties of the molded article, such as impact strength. In some embodiments, when made and tested for ARM Impact Strength according to the Test Methods, a rotomolded sample that is 5 inches by 5 inches by 0.125 inches can achieve Mean Failure Energy of at least 55 ft-lbs. or at least 57 ft-lbs. or at least 58 ft.-lbs.

In some embodiments, when made and tested for ARM Impact Strength according to the Test Methods, a rotomolded sample that is 5 inches by 5 inches by 0.125 inches can achieve a Mean Failure Energy of at least 50 ft-lbs. or at least 55 ft-lbs. or at least 60 ft-lbs. or at least 62 ft-lbs. or at least 65 ft-lbs. or at least 70 ft-lbs., when molded with a PIAT of at most 200°C or at most 190°C or at most 180°C or at most 170°C.

In some embodiments, the rotomolding process includes a polyethylene composition, wherein the polyethylene composition comprises: at least 90 weight percent HDPE or LLDPE polyethylene polymer (excluding pigments and fillers); from 0.05 weight percent to 0.5 weight percent polyalkylene glycol that consists essentially of ethylene oxide repeating units or propylene oxide repeating units or both, based on the weight of polyethylene polymer; and from 0 to 5 weight percent additives selected from the group consisting of antioxidants, light stabilizers, acid scavengers, processes aids such as lubricants, rheology control agents, mold release agents, antiblock additives and slip agents, antistatic additives and flame retardants, based on the weight of polyethylene polymer.

### Test Methods

Parameters described in this application can be measured using the following measurements:

| Parameter | Test |
|---|---|
| Density | ASTM D792, Method B |
| Melt Index (PE) | ASTM D1238, Condition 190°C. Measured with 2.16 Kg weight (I₂), 10 kg (I₁₀), or 21.6 kg (I₂₁). |
| Comonomer Content/ Short Chain Branches per 1000C | ASTM 5017, Standard Test Method for Determination of Linear Low Density Polyethylene (LLDPE) Composition by Carbon-13 Nuclear Magnetic Resonance, |
| Molecular Weight and Long Chain Branching Frequency | See below |
| Particle Sizes | Test Method for Particle Size of Rotational Molding Powders (Version 2.5, December 2015), Association of Rotational Molders. |
| Vicat Softening point | ASTM D1525 |
| Tensile Stress and Strain | ISO 527-2 |
| 1% Secant Modulus | ISO 178 |
| Bubble Observation | Sample plaques are observed under microscopy with reflected light at 8x magnification. The surface of plaques that were in contact with the mold (also called "outer surface") are observed and photographed. |
| ARM Impact Resistance | Association of Rotational Molders International (ARM) Low Temperature Impact Test Version 4.0 (2003) with 10 lb dart. |
| Environmental Stress Crack Resistance (ESCR) | ASTM D-1693, Standard Test Method for Environmental Stress-Cracking of Ethylene Plastics |

Molecular Weight and Long-Chain Branching Frequency: Number average molecular weight (Mₙ,) and weight average molecular weight (M_{w}) are measured using gel permeation chromatography (GPC), also known as size exclusion chromatography (SEC). This technique utilizes an instrument containing columns packed with porous beads, an elution solvent, and detector in order to separate polymer molecules of different sizes. Measurement of molecular weight by SEC is well known in the art and is discussed in more detail in, for example, Slade, P. E. Ed., Polymer Molecular Weights Part II, Marcel Dekker, Inc., NY, (1975) 287-368; Rodriguez, F., Principles of Polymer Systems 3rd ed., Hemisphere Pub. Corp., NY, (1989) 155-160; U.S. Pat. No. 4,540,753; and Verstrate et al., Macromolecules, vol. 21, (1988) 3360; T. Sun et al., Macromolecules, Vol. 34, (2001) 6812-6820; and US Patent 9,670,345B2 (col 20-21). Measurement of long-chain branching is described in Pathaweeisariyakul et al., "Methods of Long Chain Branching Detection in PE by Triple-Detector Gel Permeation Chromatography", J. APPL. POLYM. SCI. 2015, DOI: 10.1002/APP.42222.

### EXAMPLES

The materials listed in Table 1 are used for these examples:

**Table 1**

| **Ingredient Type** | **Product Name** | **Chemical Description, Chemical formula, or Structure** | **Source** |
|---|---|---|---|
| Densification aid (PEG-8000) | CARBOWAX^{™} | Polyethylene glycol | TDCC |
| | Polyethylene Glycol 8000 | | |
| Densification aid (PEG-3350) | CARBOWAX^{™} | Polyethylene glycol | TDCC |
| | Polyethylene Glycol 3350 | | |
| Densification aid (PEG-400) | CARBOWAX^{™} | Polyethylene glycol | TDCC |
| | Polyethylene Glycol 400 | | |

| | | | |
|---|---|---|---|
| TDCC = The Dow Chemical Company | | | |

In addition to the above, a linear low density polyethylene (LLDPE) made via a solution process of ethylene and 1-hexene with a Ziegler-Natta catalyst having a density of 0,939 grams/cm³ and melt index of 3.8 g/10 mins. The Ziegler-Natta catalyst-premix was prepared substantially according to U.S. Pat. No. 4,612,300, by sequentially adding to a volume of ISOPAR E, a slurry of anhydrous magnesium chloride in ISOPAR E, a solution of EtAlCl2 in heptane, and a solution of Ti(O-iPr)4 in heptane, to yield a composition containing a magnesium concentration of 0.20M and a ratio of Mg/Al/Ti of 40/12.5/3. While being fed to, and prior to entry into the polymerization reactor, the catalyst premix was contacted with a dilute solution of Et3Al, in the molar Al to Ti ratio of 4.0, to give the active catalyst.

### Sample Preparation

Masterbatches containing the LLDPE resin and densification aids named above are made by coextruding the components shown in Table 2 using a Thermo Scientific Rheomex PTW 16 OS electric temperature controlled 16 mm Twin Screw Extruder driven by a RheoDRive 7 OS for continuous compounding. Screws are configured as three mixing stage suitable for polymer compounding with an LID ratio of 40: 1. The samples are compounded at 300 rpms at 20% feeder output which yields 2.7 lbs./hr. Each sample is fed through the extruder then out through a single hole 45 degree angled 2 mm diameter die into a chilled water bath. The resulting strand is fed to a VariCut Pelletizer.

**Table 2**

| | |
|---|---|
| MB1 | LLDPE + 5 wt% PEG-8000 |
| MB2 | LLDPE + 5 wt% PEG-3350 |
| MB3 | LLDPE + 7.5 wt% PEG-3350 |
| MB4 | LLDPE + 5 wt% PEG-400 |

The masterbatches are coextruded with more LLDPE using the following process, to make coextruded pellet formulations having the contents shown in Table 3: IE2, IE3, IE4 and CE5. LLDPE resin and masterbatch are weighed into a 55 gallon drum with lid and liner. The drum is sealed and blended on a tumble blender for 30 minutes. The blended samples are coextruded on a coextrusion line having the following characteristics:

| | |
|---|---|
| Extruder | Coperion ZSK 26 twin screw extruder. The extruder's Barrel assembly stretches from zone 1 to zone 11. This barrel assembly consists of 11-barrel blocks. Total extruder barrel length is 1125 mm, therefore the total length of the extruder's processing section is 1125 mm. The barrel assembly is a 44/1 L/D. The Extruder's barrel I.D. is 26 mm. The extruder's Screw diameter is 25.5 mm The feeder is a K-Tron KQX3 single screw polymer feeder. |
| Die | 4 hole die |
| Feed Rate | 30 lb per hour |
| Nitrogen blanket | 9.5 SCFH |
| Screw Speed | 300 RPM. |
| Vacuum | 5 mmHg |

Strands are extruded into a 6 ft chilled water bath, dried with a Huestis Air Block and pelletized with a Conair 304 strand pelletizer. Chopped pellets are stored overnight in open 50 lb paper bags and then sealed.

Pure LLDPE resin (CE1) and the coextruded pellet formulations: IE2, IE3, IE4 and CE5 are ground using a PKA-18 Lab Mill manufactured by Powder King at a temperature of about 65°C in the pulverization chamber. The powder exiting the mill chamber goes through a classifying section with a 35 mesh screen. Material that does not pass through the mesh is recirculated into the blade chamber for further size reduction. IE4 and CE5 each contain 150 ppmw of a commercial UV absorber.

**Table 3**

| **Ingredient Type** | **SI Unit s** | **CE1** | **IE2** | **IE3** | **IE4** | **CE5** |
|---|---|---|---|---|---|---|
| Masterbatch | | None | MB1 | MB2 | MB3 | MB4 |
| LLDPE | Wt. % | 100 | 99.9 | 99.9 | 99.91 | 99.91 |
| PEG-8000 | ppm w | | 1000 | | | |
| PEG-3350 | ppm w | | | 1000 | 750 | |
| PEG-400 | ppm w | | | | | 750 |
| Total Solids Content | Wt. % | 100 | 100 | 100 | 100 | 100 |

Each sample is rotomolded into a 12in x 12in x 12in cube shape using a Rotoline Lab 0.50 rotational molder fitted with an aluminum mold. A sample size of 2.9 lbs. is used for each box to lead to a wall thickness of approximately 0.125 in (3.17 mm). The oven temperature for the heating stage is set to 288 °C (550 °F). The primary axis rotation is set to 6 rpm, and the secondary axis rotation is set to 1.5 rpm. The arm rotation is reversed every 3 minutes.

The temperature inside the mold is monitored with a thermocouple in the center of the mold. The peak internal air temperature (PIAT) for each cube is recorded. (PIAT is the peak temperature measured in the mold during the heating and cooling steps.) For each sample, cubes are made with a PIAT of 170°C, 180°C, 190°C, 200°C, 210°C, and 220°C. Each part is cooled to 90°C before being removed from the mold.

A total of 16 test specimens (5 in x 5 in plaque) are obtained from each rotomolded cube (4 from each side, excluding the top and bottom).

The mold-side surface of each specimen is observed under an 8x microscope with reflected light. The observation shows that inventive polyethylene compositions generally achieve superior densification (fewer and/or smaller bubbles) for similar PIAT, especially at lower PIAT. Figure 1 compares IE4 with CE1 and CE2 at 170°C and 200°C.

Each specimen is tested for ARM Impact Strength according to the Test Methods. The average results of ARM Impact Strength Testing for each set of 4 samples are shown in Table 4. The results show mean failure energy (MFE) in ft-lbs.

**Table 4**

| PIAT | IE2 | IE3 | IE4 | CE1 | CE5 |
|---|---|---|---|---|---|
| 170°C | 63 | 66 | 54 | 45 | 45 |
| 180°C | 64 | 70 | 58 | 44 | 42 |
| 190°C | 71 | 72 | 57 | 44 | 48 |
| 200°C | 71 | 67 | 59 | 52 | 52 |
| 210°C | | | 62 | 55 | 55 |
| 220°C | | | 50 | 54 | 52 |

The test results show that the inventive compositions achieve higher impact strength with lower PIAT and thus less heat history.

## Claims

1. A rotomolding process comprising the steps of:
a) Loading a granular polyethylene composition into a mold and closing the mold (the "loading step");
b) Heating the mold to a temperature at which the polyethylene composition melts while rotating the mold on at least two axes to form a coating of the polyethylene composition adhered to the internal surface of the mold (the "heating step");
c) Cooling the mold to solidify the polyethylene composition adhered to the internal surface of the mold (the "cooling step"); and
d) Releasing the molded article from the mold (the "extraction step"),
**characterized in that** the granular polyethylene composition comprises (1) a polyethylene polymer, and (2) a polyalkylene glycol having a weight average molecular weight greater than 2000 Da, in a concentration from 0.01 weight percent to 1 weight percent, based on the weight of the polyethylene polymer.

2. The rotomolding process of claim 1, wherein the polyethylene polymer is a high-density polyethylene polymer having a density from 0.93 g/cm³ to 0.98 g/cm³ and a melt index (I2) from 1 dg/min. to 20 dg/min.

3. The rotomolding process of claim 1, wherein the polyethylene polymer is a linear low-density polyethylene polymer having a density from 0.90 g/cm³ to 0.94 g/cm³ and a melt index (I2) from 1 dg/min. to 20 dg/min.

4. The rotomolding process of any preceding claim, wherein the polyalkylene glycol consists essentially of ethylene oxide repeating units or propylene oxide repeating units or both.

5. The rotomolding process of any preceding claim, wherein the polyalkylene glycol in the polyethylene composition has a weight average molecular weight of at least 2600 Da.

6. The rotomolding process of any preceding claim, wherein the polyalkylene glycol in the polyethylene composition has a melting temperature from 40°C to 90°C.

7. The rotomolding process of any preceding claim, wherein the concentration of polyalkylene glycol is from 0.05 to 0.5 weight percent, based on the weight of polyethylene polymer.

8. The rotomolding process of any preceding claim, wherein the polyethylene composition is in the form of a powder having a median particle size from 28 mesh to 140 mesh.

9. The rotomolding process of any preceding claim, wherein the mold is heated to a peak internal air temperature from 170°C to 200°C.

10. The rotomolding process of any preceding claim, wherein the mold is heated to a peak internal air temperature of no more than 190°C.

11. The rotomolding process of any preceding claim, wherein the polyethylene composition comprises:
a) at least 90 weight percent HDPE or LLDPE polyethylene polymer (excluding pigments and fillers);
b) from 0.05 weight percent to 0.5 weight percent polyalkylene glycol that consists essentially of ethylene oxide repeating units or propylene oxide repeating units or both, based on the weight of polyethylene polymer; and
c) from 0 to 5 weight percent additives selected from the group consisting of antioxidants, light stabilizers, acid scavengers, processes aids such as lubricants, rheology control agents, mold release agents, antiblock additives and slip agents, antistatic additives and flame retardants, based on the weight of polyethylene polymer.

12. The rotomolding process of claim 11, wherein the mold is heated to a peak internal air temperature from 180°C to 200°C.

13. The rotomolding process of claim 12, wherein the mold is heated to a peak internal air temperature of no more than 190°C.

14. A molded article made by the rotomolding process in any one of claims 1 to 13.

15. The molded article of claim 14, wherein the average wall thickness is 2 mm to 40 mm.
